(19) Europäisches Patentamt
European Patent Office
Office européen des brevets

(11) EP 3 362 495 B1

(12) EUROPEAN PATENT SPECIFICATION

(45) Date of publication and mention of the grant of the patent:
**12.08.2020 Bulletin 2020/33**

(21) Application number: **16785607.9**

(22) Date of filing: **05.10.2016**

(51) Int Cl.:
***C08G 18/58*** (2006.01) ***C08J 5/24*** (2006.01)
***C08G 59/00*** (2006.01) ***C08G 59/22*** (2006.01)
***C08L 63/00*** (2006.01)

(86) International application number:
**PCT/US2016/055437**

(87) International publication number:
**WO 2017/066056 (20.04.2017 Gazette 2017/16)**

(54) **FAST CURE EPOXY COMPOSITION FOR USE IN HIGH THROUGHPUT MANUFACTURING PROCESSES**

SCHNELLHÄRTENDE EPOXIDZUSAMMENSETZUNG ZUR VERWENDUNG IN HOCHDURCHSATZHERSTELLUNGSVERFAHREN

COMPOSITION D'ÉPOXY À DURCISSEMENT RAPIDE DESTINÉE À ÊTRE UTILISÉE DANS DES PROCÉDÉS DE FABRICATION À HAUT RENDEMENT

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **13.10.2015 US 201562240556 P**

(43) Date of publication of application:
**22.08.2018 Bulletin 2018/34**

(73) Proprietor: **Dow Global Technologies, LLC**
**Midland, MI 48674 (US)**

(72) Inventors:
- **BANK, David H.**
  **Midland, MI 48667 (US)**
- **BISHOP, Matthew T.**
  **Midland, MI 48674 (US)**
- **PARSONS, Thomas J.**
  **Midland, MI 48674 (US)**
- **MECCA, Jodi M.**
  **Midland, MI 48674 (US)**
- **WU, Huang**
  **Midland, MI 48667 (US)**

(74) Representative: **Beck Greener LLP**
**Fulwood House**
**12 Fulwood Place**
**London WC1V 6HR (GB)**

(56) References cited:
**WO-A1-2015/023615** **WO-A1-2015/023615**
**WO-A1-2015/047799** **WO-A1-2015/047799**
**US-A- 5 480 958** **US-A- 5 480 958**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 362 495 B1

## Description

FIELD

The present invention relates generally to rapid cure epoxy formulations, and in particular for epoxy formulations that may be used in the preparation of fiber reinforced composites.

BACKGROUND

Fiber reinforced composites are increasingly being used in a wide variety of applications due to their relative low weight and high strength. An example of one such application is the automotive industry where there is a desire to improve fuel efficiency by reducing vehicle weight. Fiber reinforced composite structures provide a material having a lower density than a corresponding structure comprising a metallic alloy while retaining mechanical properties comparable with steel and aluminum.

Generally, fiber reinforced composites comprise a resin matrix that is reinforced with a fibers, such as carbon fibers. The fiber reinforced composites are typically prepared in a process in which a fabric or tow comprising fibers is impregnated with the resin to form a so called prepreg. The term prepreg is commonly used to describe a reinforced composite comprising fibers that are impregnated with a resin, and that is in an uncured or partially cured state. The prepreg can then be molded into a final or semifinal molded part by subjecting the prepreg to conditions sufficient to cure the resin. Typically, curing takes place by heating the prepreg in a mold at a sufficient temperature and for a sufficient amount of time to cure the resin. Epoxy resins are commonly used in the productions of fiber reinforced composites.

The demands of the automotive industry require that the preparation of the molded parts be completed at the speed and automation typically seen in automotive plants. As a result, epoxy formulations for use in preparing a molded part must have relatively fast cure rates, and must be capable of being processed in an automated system. However, many commercial epoxy formulations that are available today are not suitable for high volume processing and automated systems.

Accordingly, there still exists a need for improved epoxy formulations having rapid cure rates that can be used in high through manufacturing processes.

WO 2015/023615 A1 discloses one-part thermoset composition capable of being combined with a reinforcement component such as continuous, woven mat, chopped or recycled fibers in a process to create a molding compound for the formation of composites.

US 5,480,958 A discloses one part polyepoxide resins comprising a polyepoxide resin based on a polyglycidyl ether of a phenol, an oxazolidone toughener and a latent amine curative.

WO 2015/047799 A1 discloses curable compositions comprising a) an epoxy mixture comprising i) a first epoxy component comprising epoxy phenol novolac oligomers having a content of 2-functional monomers of less than 10 weight percent based on the total weight of the first epoxy component and having an epoxide equivalent weight in the range of 170 to 200; and ii) a second epoxy component comprising an epoxy resin having monomers with an average functionality of at least 2 and b) a hardener. The curable compositions are said to be used to prepare prepregs for hot-melt applications.

SUMMARY

Embodiments of the invention are directed to epoxy resin compositions that are particularly useful for preparing fiber reinforced composites that meet the demands associated with high speed automated manufacturing systems. In particular, embodiments of the present invention are based on the recognition by the inventors that epoxy resin compositions to be used in high volume automated manufacturing systems, such as those commonly associated with the auto industry, need to have relatively fast cure rates, low to negligible tack, low viscosity, and high cured glass transition temperature ($T_g$). These and additional advantages may be provided by epoxy resin compositions in accordance with embodiments of the present invention.

In addition to the desired properties noted above, it is important that fiber reinforced composites for use in certain industries, such as the automotive industry, must have mechanical properties that are similar to steel and aluminum. More specifically, the inventors have discovered that fiber reinforced composites having high $T_g$ and toughness following curing are particular useful in the production of articles and parts that are to be used in the automotive industry. In preferred embodiments, the present invention provides an epoxy resin composition that exhibits improved toughness following curing. As discussed in greater detail below, epoxy formulations having a lower degree of cross linking following curing generally have higher toughness at a given $T_g$.

In one embodiment, the invention provides an epoxy resin composition comprising a first epoxy resin component containing an oxazolidone; a second epoxy resin component; a latent hardener comprising dicyandiamide particles

having a particle distribution in which 98 percent of the dicyandiamide particles have a diameter less than 10 microns, and at least 35% of the dicyandiamide particles have a particle size of less than 2 microns; and an epoxy soluble latent catalyst.

As explained below, the inventors have found that the combination of the epoxy components, a latent hardener comprising dicyandiamide particles in which at least 35% of the dicyandiamide particles have a particle size of less than 2 microns; and an epoxy soluble latent catalyst provides an epoxy resin composition that provides a more homogeneous infusion of the resin into a fibrous material for forming a prepreg. As a result, faster cure of the epoxy resin composition is obtained, which in turn, reduces the mold cycle time for preparing molded articles and parts.

In one embodiment, the second epoxy resin component comprise a liquid epoxy resin and an epoxy novolac resin. Preferably, the liquid epoxy resin in the second epoxy component comprises a diglycidyl ether of bisphenol A

In a further embodiment, the amount of the first epoxy resin component is from 19 to 54 weight percent, the amount of liquid epoxy resin is from 11 to 38 weight percent, and the amount of epoxy novolac resin is from 17 to 61 weight percent based on the total weight of all epoxy resin components in the epoxy resin composition.

Preferably, the latent catalyst is toluene bis-dimethyl urea. The amount of the latent catalyst in the epoxy resin composition may be present at a level of 1 to 7 parts per hundred parts epoxy resin, and the latent hardener may be present in an amount relative to the total amount of epoxy components in the epoxy resin composition corresponding to an epoxy/hardener equivalent ratio from 0.5 to 3.

In one embodiment, the epoxy resin composition has an uncured glass transition temperature ($T_{g,0}$) from 5 to 15°C, and a cured glass transition temperature ($T_{g,c}$) from 150 to 160°C.

Embodiments of the present invention may also provide molded parts having improved toughness as characterized by the theoretical cross-link index (X) of the resin. In one embodiment, the theoretical cross-link index (X) of the resin may be from 0.10 to 0.20.

In one embodiment, the first epoxy component containing an oxazolidone is present in an amount from 10 to 65 weight percent, based on total weight of all epoxy components; the second epoxy component is present in an amount from 35 to 90 weight percent, based on the total weight of all epoxy components; and the epoxy resin composition has a $T_{g,0}$ that is from 0 to 20 °C, a $T_{g,c}$ that is from 140 to 165 °C, and a theoretical cross-link index *X* that is from 0.10 - 0.20.

Embodiments of the invention are also directed to a prepreg comprising an epoxy resin composition that is in accordance with the present invention. For example, an embodiment of the invention is directed to a prepreg comprising a fibrous material that is infused with an epoxy resin composition, the epoxy resin composition comprising:

a first epoxy resin component containing an oxazolidone;
a second epoxy resin component comprising a blend of a diglycidyl ether of bisphenol A and an epoxy novolac resin;
dicyandiamide particles having a particle distribution in which 98 percent of the dicyandiamide particles have a diameter less than 10 microns, and at least 35% of the dicyandiamide particles have a particle size of less than 2 microns; and
an epoxy soluble latent catalyst,
wherein the epoxy resin composition has a $T_{g,0}$ that is from 5 to 15 °C, a $T_{g,c}$ that is from 140 to 165 °C, and a theoretical cross-link index *X* that is from 0.10 to 0.20.

In one embodiment, the prepreg comprises a prepreg wherein the amount of the first epoxy resin component is from 10 to 65 weight percent, the amount of diglycidyl ether of bisphenol A is from 11 to 38 weight percent and the amount of epoxy novolac resin is from 17 to 61 weight percent, based on the total weight of all epoxy components in the epoxy resin composition.

A wide variety of materials may be used in the fibrous material. For example, the fibrous material may comprise carbon fibers. Preferably, the fibrous material comprises a plurality of stacked layers of non-crimped fabrics.

In one embodiment, during the prepreg process or following formation of the prepreg, the epoxy resin composition is exposed to conditions that result in a partial cure of the epoxy resin composition. As a result, the glass transition temperature of the prepreg ($T_{g,p}$) may be advanced, for example, from 12 to 25 °C, to provide a prepreg having low tack.

## BRIEF DESCRIPTION OF THE DRAWING

FIG. 1 is a backscattered electron image obtained with a scanning electron microscope (SEM) with energy dispersive spectroscopy (EDS) element mapping.

## DETAILED DESCRIPTION

The present inventions now will be described more fully hereinafter with reference to the accompanying drawing, in which some, but not all embodiments of the invention are shown. Indeed, these inventions may be embodied in many

different forms and should not be construed as limited to the embodiments set forth herein; rather, these embodiments are provided so that this disclosure will satisfy applicable legal requirements.

The inventors have discovered that an epoxy resin composition comprising a solid epoxy resin containing an oxazolidone as a first epoxy component, a second epoxy component, a soluble latent catalyst, and a latent hardener having a particle distribution in which at least 35 weight percent of particles, based on the total weight of the hardener, have an average particle size of less than 2 microns, provides an epoxy formulation having a relatively fast rate of cure, low to negligible tack, and a final cured fiber reinforced composite having a high $T_g$.

In one embodiment, the present invention provides an epoxy resin composition comprising a first epoxy resin component containing an oxazolidone; a second epoxy resin component; a latent hardener, such as dicyandiamide, having a particle distribution in which at least 35 percent of the particles have a diameter of less than 35 microns, and a latent catalyst that is soluble in the epoxy resin composition.

The first epoxy resin component comprises a solid epoxy resin containing an oxazolidone. Preferably, the first epoxy resin component comprises an epoxy terminated polyoxazolidone resin. Epoxy terminated polyoxazolidone resins are a reaction product formed by reacting a polyepoxide compound with a polyisocyanate compound. A representative chemical structure of such an oxazolidone is shown below in Formula I:

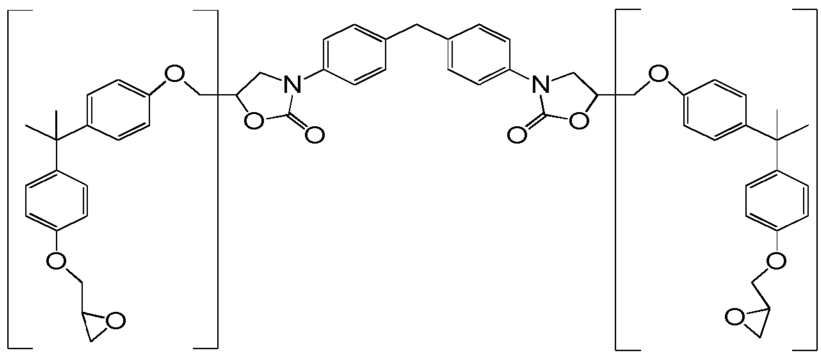

Formula I

The polyepoxide compound useful in the present invention is suitably a compound which possesses more than one 1,2-epoxy group. In general, the polyepoxide compound is a saturated or unsaturated aliphatic, cycloaliphatic, aromatic or heterocyclic compound which possesses more than one 1,2-epoxy group. The polyepoxide compound can be substituted with one or more substituents which are non-reactive with the isocyanate groups such as lower alkyls and halogens. Such polyepoxide compounds are well known in the art.

Illustrative polyepoxide compounds useful in the practice of the present invention are also described in the Handbook of Epoxy Resins by H. E. Lee and K. Neville published in 1967 by McGraw-Hill, New York and U.S. Pat. No. 4,066,628.

Particularly useful polyepoxide compounds, which can be used in the present invention, are polyepoxides having the following general formula

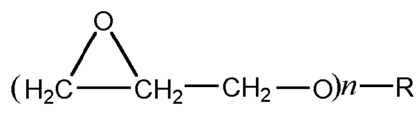

wherein R is substituted or unsubstituted aromatic, aliphatic, cycloaliphatic or heterocyclic polyvalent group and n has an average value of from greater than about 1 to less than about 5. The preferred diepoxides include diglycidyl ether of 2,2-bis(4-hydroxyphenyl) propane (generally referred to as bisphenol A) and diglycidyl ether of 2,2-bis(3,5-dibromo-4-hydroxyphenyl) propane (generally referred to as tetrabromobisphenol A) and any mixture thereof.

The polyisocyanate compound useful in the present invention is represented by the following general formula: $(0{=}C{=}N)_m$-R' wherein R' is a substituted or unsubstituted aliphatic, aromatic or heterocyclic polyvalent group and m has an average value of greater than about 1 to less than about 5, preferably from about 1.5 to about 4, most preferably from about 2 to about 3. Examples of suitable polyisocyanates include 4,4'-methylene bis(phenylisocyanate) (MDI) and isomers thereof, higher functional homologs of MDI (commonly designated as "polymeric MDI"), toluene diisocyanate (TDI) such as 2,4-toluene diisocyanate and 2, 6-toluene diisocyanate, m-xylylene diisocyanate, hexamethylene diisocyanate (HMDI) and isophoronediisocyanate or any mixture thereof. Other suitable polyisocyanate compounds are

described in U.S. Pat. Nos. 3,313,747; 4,066,628 and 4,742,146. Preferred polyisocyanate compounds are 4,4'-methylene bis(phenylisocyanate) (MDI) and isomers thereof, polymeric MDI and toluene diisocyanate (TDI). The most preferred polyisocyanate compounds are 4,4'-methylene bis(phenylisocyanate), isomers thereof and polymeric MDI.

A suitable catalyst is employed in the present invention to facilitate reaction of the polyepoxide compound with the polyisocyanate compound. Examples of suitable catalysts include zinc carboxylate, organozinc chelate compound, trialkyl aluminum, quaternary phosphonium and ammonium salts, tertiary amines and imidazole compounds. The preferred catalysts are imidazole compounds. Particularly, preferred catalysts are 2-phenylimidazole 2-methylimidazole, 1-methylimidazole, 2-ethyl-4-methylimidazole and 4,4'-methylene-bis(2-ethyl-5-methylimidazole). The catalyst is generally employed in an amount of from about 0. 01 to about 2, preferably from about 0.02 to about 1, most preferably from about 0.02 to about 0.1, weight percent based on the combined weight of the polyepoxide compound and polyisocyanate compound used.

Examples of suitable epoxy resins containing an oxazolidone are available from The Dow Chemical Company under product names D.E.R.™ 6508 or D.E.R.™ 6510.

It has been found that the use of an epoxy-terminated polyoxazolidone in the epoxy resin composition of the present invention helps reduce the tackiness of the epoxy resin composition and the resultant composite precursors, such as prepregs, while still maintaining high $T_g$ values of the cured compositions and cured composites. Low to negligible tack is a desirable property for preparing fiber reinforced composites that are used in automated manufacturing processes, such as those typically used in the automotive industry. The reason for this is several fold. First, in many circumstances it may be desirable to prepare the prepreg (e.g., the uncured composite precursor) at a site that is remote from the location or facility where final molding and assembly of an article prepared from the prepreg is performed. In such cases, sheets of the prepreg may be prepared by infusing the epoxy resin composition into a fibrous material, for example, tows or fabrics formed from reinforcing fibers, to form a prepreg which may then be packaged, stored, or shipped for future use. To meet this requirement it is important that prepregs prepared from the epoxy resin composition have low tack so that the prepregs may be easily handled and unpackaged without self-sticking of the prepregs. Second, low to negligible tack is also important to help prevent the epoxy resin composition from adhering to the automated equipment and mold during the process of molding the prepreg into an article or part. Having low tack will allow the prepregs to be cut, picked up and placed, and stacked without sticking to tables, grippers, equipment, or other materials. Avoidance of self-sticking of the prepregs during handling can also be beneficial because it may permit adjusting placement of prepreg layers during automated layup.

In general, tackiness is a function of $T_g$ and molecular weight of the combination of resins in the composition. Therefore, to reduce tackiness at ambient temperatures, the inclusion of some fraction of component resins with $T_g$ above ambient temperature in the composition is desirable. Higher molecular weight of the resin can further reduce tackiness, in particular the rate at which two surfaces stick together. Solid epoxy resins have $T_g$ above ambient room temperature and have higher molecular weight than those of liquid epoxy resins. Therefore, inclusion of some fraction of solid epoxy resins in the composition is desirable for reducing tackiness.

Epoxy formulations having low tack are typically associated with a $T_g$ that is above ambient room temperature. However, such a $T_g$ may not sufficiently infuse into the fibrous matrix during prepreg formation. In general, epoxy resin compositions that provide excellent infusion tend to have an uncured glass transition temperature ($T_{g,0}$) that is too low to provide the desired low tack. Similarly, epoxy resin compositions which provide sufficiently low tack tend to have a $T_{g,0}$ which is too high to provide the required fiber infusion.

In embodiments of the present invention, the epoxy resin composition is formulated to have a $T_{g,0}$ that is sufficiently low to provide a desired rate of infusion during the prepregging process. Infusion of the epoxy resin composition into the fibrous matrix is particularly important for preventing or reducing the presence of void spaces in the prepreg.

To help reduce tack following infusion, the prepreg may then be subjected to conditions that result in partial curing of the epoxy resin composition. For example, the infused prepreg may be subjected to conditions that cause partial reaction of the epoxy resin composition. This in turn, increases the glass transition temperature of the prepreg ($T_{g,p}$) and thereby produces a prepreg having sufficiently low tack for further processing. The increase in the $T_g$ of the epoxy resin composition from an initial $T_{g,0}$ to a higher $T_{g,p}$ is preferably carried out during the prepregging process itself, but can also be carried out to equal effect in a separate process after prepregging.

Advancement from $T_{g,0}$ to $T_{g,p}$ may be accomplished by exposing the epoxy resin composition to an elevated temperature for a sufficient amount of time to achieve the desired degree of reaction. The appropriate time and temperature depend on the desired degree of advancement and the cure kinetics of the resin composition, which in turn depends on variables such as latent hardener level, latent catalyst level, and the types and amounts of the epoxy resin components. For example, for a dicyandiamide cured epoxy resin compositions, approximately 1 percent reaction corresponds to an increase in $T_{g,0}$ of approximately 1.1 °C.

Although as mentioned the time and temperature required for a given degree of advancement depend on the specific resin composition, the following time/temperature combinations indicate approximately what is required to increase $T_{g,0}$ by 5 °C: heating the prepreg for 480 seconds at 107 °C, 240 seconds at 116 °C, 120 seconds at 125 °C,

and 60 seconds at 134 °C. Such an additional heating step (referred to herein as an advancement) may be readily accomplished as part of the prepregging process itself. Separate processes after prepregging which are suitable for controlled advancement include roll-to-roll processes where the prepreg is unspooled, exposed to heat, and respooled; and batch processes such as storage of rolls of prepreg for prescribed time in a temperature-controlled room.

Preferably, to achieve desired infusion during prepregging, the starting epoxy resin composition has a $T_{g,0}$ from 5 °C to 10°C. In general, epoxy resin compositions in accordance with embodiments of the invention have an uncured $T_g$ of less than 20 °C. Preferably, the epoxy resin composition has an uncured $T_g$ that is from 0 to 20°C, and more preferably, from 5 to 15 °C, and more preferably, from 5 to 10°C. Glass transition temperatures of the epoxy resin compositions can be measured with a TA Instruments Q2000 differential scanning calorimeter (DSC).

Following production of the prepreg, the prepreg may be exposed to reaction conditions to induce partial reaction of the epoxy resin composition. Preferably, the epoxy resin composition of the prepreg has a $T_{g,p}$ that is from 10 to 30°C, preferably from 12 to 25 °C, and more preferably from 12 to 20 °C. The degree of advancement, defined as $T_{g,p}$ - $T_{g,0}$, is preferably 20 °C or less, more preferably 15 °C or less, and even more preferably 10 °C or less.

Following full curing, the epoxy resin composition preferably has a $T_g$ that enables articles and parts that are molded to be removed from a mold (in the presence of internal or external mold release agent) at cure temperature without warping. This in turn may help increase the throughput of fiber reinforced composite production because it allows the molded article or part to be removed from the mold without having to wait for the molded article or part to cool. For instance, if a material can be compression molded at 150°C such that a $T_g$ greater than the molding temperature results (e.g., $T_g$ = 155 °C), then the material can be demolded at the compression molding temperature. High $T_g$ after cure can also be beneficial for improved heat resistance in the final application. High $T_g$ after cure may also provide less creep and better dimensional stability at above-ambient use temperatures and at high temperatures that might be required for curing of coatings. Following curing, epoxy resin compositions in accordance with embodiments of the present invention preferably have a $T_g$ that is from 140 to 165 °C, and more preferably, from 150 to 165 °C, and more preferably, from 150 to 160 °C.

A wide range of epoxy resins may be suitable for the second epoxy component. Examples of suitable epoxy resins may include the diglycidyl ethers of polyhydric phenol compounds such as resorcinol, catechol, hydroquinone, bisphenol, bisphenol A, bisphenol AP (1,1-bis(4-hydroxylphenyl)-1-phenyl ethane), bisphenol F, bisphenol K, bisphenol M, tetramethylbiphenol, diglycidyl ethers of aliphatic glycols and polyether glycols such as the diglycidyl ethers of $C_{2-24}$ alkylene glycols and poly(ethylene oxide) or poly(propylene oxide) glycols; polyglycidyl ethers of phenol-formaldehyde novolac resins, alkyl substituted phenol-formaldehyde resins (epoxy novalac resins), phenol-hydroxybenzaldehyde resins, cresol-hydroxybenzaldehyde resins, dicyclopentadiene-phenol resins and dicyclopentadiene-substituted phenol resins, and any combination thereof.

Suitable diglycidyl ethers include diglycidyl ethers of bisphenol A resins such as are sold by The Dow Chemical Company under the designations D.E.R.® 330, D.E.R.® 331, D.E.R.® 332, D.E.R.® 383, D.E.R.® 661 and D.E.R.® 662 resins.

Commercially available diglycidyl ethers of polyglycols include those sold as D.E.R.® 732 and D.E.R.® 736 by The Dow Chemical Company.

Epoxy novolac resins may also be used. Such resins are available commercially as D.E.N.® 354, D.E.N.® 431, D.E.N.® 438 and D.E.N.® 439 from The Dow Chemical Company.

In a preferred embodiment, the second epoxy component comprises a combination of a liquid epoxy resin and an epoxy novolac resin. For example, in one embodiment of the epoxy resin composition the second epoxy component comprises a liquid epoxy resin that is a diglycidyl ether of bisphehol A, and an epoxy novolac resin that is a polyglycidyl ether of a phenol-formaldehyde novolac.

The amount of the first epoxy component in the epoxy resin composition may range from about 10 to 65 weight percent, and in particular, from about 15 to 55 weight percent, and more particularly, from about 20 to 45 weight percent based on the total weight of all epoxy components in the epoxy resin composition. In a preferred embodiment, the amount of the first epoxy component in the epoxy resin composition is from 25 to 43 weight percent total weight of all epoxy components in the epoxy resin composition.

The amount of the second epoxy components in the epoxy resin composition may range from about 35 to 90 weight percent, and in particular, from about 45 to 85 weight percent, and more particularly, from about 55 to 75 weight percent based on the total weight of all epoxy components in the epoxy resin composition.

In preferred embodiments, the second epoxy component comprises a combination of a liquid epoxy component (e.g., a diglycidyl ethers of bisphenol A) and an epoxy novolac resin. In one embodiment, the second epoxy component comprises a liquid epoxy resin that is present in an amount 0 to 65 weight percent and an epoxy novolac resin that is present in an amount of from 0 to 70 weight percent total weight of all epoxy components in the epoxy resin composition. Preferably, the second epoxy component comprises a liquid epoxy resin that is present in an amount 10 to 40 weight percent and an epoxy novolac resin that is present in an amount of from 15 to 62 weight percent based on the total weight of all epoxy components in the epoxy resin composition. In a preferred embodiment, the second epoxy component

comprises a liquid epoxy resin that is present in an amount 15 to 30 weight percent and an epoxy novolac resin that is present in an amount of from 25 to 46 weight percent based on the total weight of all epoxy components in the epoxy resin composition.

The inventors have discovered that the addition of a micronized latent hardener having a particle distribution in which 98% of the particles have a maximum particle diameter that is less than 10 microns and where at least 35% of particles have a particle diameter that is less than 2 microns provides for a faster cure rate of the epoxy resin composition. As noted previously, fast cure rates are particularly desirable in automated applications where high throughput in the production of molded articles and parts is required.

While not wishing to be bound by theory, it is believed that during the infusion of an epoxy resin into the fibrous material to form the prepreg, the fibrous material may actually function as a filter that prevents particles from being infused past the outer surface fibers of the fibrous material. In this regard, FIG. 1 is a backscattered electron image obtained with a scanning electron microscope (SEM) with energy dispersive spectroscopy (EDS) element mapping that identifies the elements in the image. In FIG. 1, the granular objects on the surface of the fibers are nitrogen bearing dicyyandimide particles that have agglomerated on the surface of the fibers. As a consequence, concentration of the latent hardener within the fibrous material is undesirably reduced.

By using a latent hardener having the desired particle distribution (e.g., at least 35 percent of the particles have a diameter of less than 2 microns), a more homogeneous infusion of the epoxy resin composition into the fibrous material may be achieved. In turn, this provides an epoxy resin composition having faster cure rates, which reduces mold cycle times, and thereby increases the rate at which articles and parts molded from prepregs may be prepared.

Preferably, the latent hardener has a particle distribution in which 98% of the particles have a maximum particle diameter that is less than 6 microns, and more preferably, 98% of the particles have a maximum particle diameter that is less than 4 microns. Preferably, at least 45% of the particles having a diameter of less than 2 microns, and more preferably, at least 55% of the particles having a diameter of less than 2 microns, and even more at least 90% of the particles having a diameter of less than 2 microns. In a preferred embodiment, 100% of the particles have a diameter of less than 2 microns. The particle size can be measured with a laser diffraction system, such as the Beckman Colter LS 13-320 Laser Diffraction Particle Size Analyzer equipped with the Tornado Dry Powder System.

Examples of latent hardeners that may be used in embodiments of the present invention include dicyandiamide and guanamines, such as acetoguanamine and benzoguanamine. Preferably the latent hardener comprises dicyandiamide. A suitable dicyandiamide latent hardener that may be used in embodiments of the invention is available from Alzchem under the product name DYHARD® SF100.

Most commercially available dicyandiamide hardeners have particle distributions where the average particles sizes are well above 2 microns. For example, Alzchem's literature describes that the dicyandiamide available under the product name DYHARD® SF100 has a particle distribution in which 98% of the particles have a diameter between 5.2 and 5.8 microns. Thus, to provide a latent hardener having a desired particle size distribution it may be necessary to further process the hardener, for example, by milling or grinding, to produce a particle distribution in which at least 35% of particles have a particle diameter that is less than 2 microns.

The latent hardener in the epoxy resin composition is present in an amount that is sufficient to cure the epoxy resin. In one embodiment, the latent hardener is present in an amount relative to the total amount of epoxy resins in the composition corresponding to an epoxy/hardener equivalent ratio from 0.5 to 3 where the equivalent ratio is calculated by:

$$\frac{(mepoxy/EEW)}{(mhardener/HEW)}$$

where *mepoxy* is the mass of epoxy resin, EEW is equivalent weight per epoxy group of the epoxy component blend, *mhardener* is the mass of the hardener, and HEW is the equivalent weight per active hydrogen of the hardener blend. Preferably the epoxy/hardener equivalent ratio is 0.75 to 2, more preferably 0.9 to 1.1, and most preferably 1.

In terms of weight percent, the amount of latent hardener in the epoxy resin composition is typically between 5 and 15 weight percent based on the total weight of the epoxy resin composition, and more typically from about 6 to 12 weight percent. In a preferred embodiment, the amount of latent hardener in the epoxy resin composition is between 7 and 8 weight percent, based on the total weight of the epoxy resin composition.

The epoxy resin composition also includes a latent catalyst that is soluble in the epoxy resins of the composition. For a solubilized catalyst to be latent generally requires that the latency comes directly from the chemical structure of the catalyst. For example, such a latent catalyst may include a blocked catalyst where the actual catalytically active species is not present until generated by an unblocking reaction that occurs at high temperatures, which are typically used during molding of the prepreg.

As used herein, the term 'soluble" with respect to the latent catalyst requires that the catalyst be substantially dissolved in the epoxy resin composition prior to infusion of the epoxy resin composition into the fibrous material.

Substantially dissolved means that greater than 90% of the catalyst, and preferably greater than 95%, and most preferably 100% of the catalyst is dissolved in the epoxy resin composition. Typically, it is desirable to dissolve the catalyst in the epoxy resin composition during mixing of the epoxy resin composition.

The amount of the latent catalyst in the epoxy resin composition is at a level of 1 to 7 parts per hundred parts epoxy resin (PHR of catalyst = 100 ($m_{catalyst}/m_{epoxy}$), where $m_{catalyst}$ is the mass of the catalyst and $m_{epoxy}$ the mass of the epoxy resin. In a preferred embodiment, the latent catalyst is present in an amount from 2 to 6 PHR, and more preferably, from 3 to 5 PHR.

Examples of latent catalysts that may be used in embodiments of the present invention include substituted urea and/or modified imidazole (e.g., 2-phenylimidazole, 2,4-diamino-6-[2'-methylimidazolyl-(1')]-ethyl-s-triazine, 2,4-diamino-6-[2'-methyl imidazolyl-(1')]-ethyl-s-triazine isocyanuric acid adduct dehydrate). In a preferred embodiment, the soluble latent catalyst are blocked urea catalysts which are latent and which are soluble in the epoxy resin. An example of a suitable latent catalyst that may be used in embodiments of the present invention is toluene bis-dimethyl urea ("TBDMU").

As previously discussed, toughness of the cured fiber reinforced composite may be of particular in certain applications. For example, in the production of automotive parts, it is important that parts comprising a molded fiber reinforced composite must have mechanical properties comparable or better than a similar part formed from steel or aluminum. Embodiments of the present invention have improved toughness as characterized by the theoretical cross-link index *X* of the cured epoxy resin composition. Preferably, epoxy resin compositions in accordance with embodiments of the present invention have a theoretical cross-link index *X* between 0.05 and 0.30, and more preferably between 0.10 and 0.25, and even more preferably between 0.10 and 0.25. In a preferred embodiment, the epoxy resin composition has a theoretical cross-link index X between 0.10 and 0.20.

The theoretical cross-link index *X* of the epoxy resin composition may be calculated from the resin composition and molecular weights of the component epoxy resins and latent hardener (e.g., dicyandiamide). Units of *X* are moles of effective four-functional cross-links per total weight of a resin composition corresponding to the case where the epoxy portion of the resin composition is 100 grams.

The theoretical cross-link index X can be used calculated from the following formula:

$$X = \frac{PHR_{Dicy}}{84} + \sum_i \left(\frac{n_i}{2} - 1\right) \cdot \left(\frac{w_i}{MW_i}\right)$$

where $PHR_{Dicy}$ is the PHR of Dicy for 100 parts of epoxy resin for ratio of epoxy to Dicy equivalents of 1;
84 is from the molecular weight of Dicy (84 g/mol) (note: in this expression Dicy is assumed to be 4-functional); and
$w_i$ is the total weight percent of the epoxy resin components in the epoxy resin composition.
$MW_i$, is the molecular weight of the epoxy resin components in the epoxy resin composition, and
$n_i$ is the functionality of the $i^{th}$ epoxy resin component of all the epoxy resin components in the epoxy resin composition.

In this formula, $w_i$, $MW_i$, and $n_i$ all include the total sum for all higher-functional epoxy resin components in the epoxy resin composition. The first term in the formula for X constitutes the moles of 4-functional cross-links contributed by dicyandiamide and each term in the sum constitutes the effective 4-functional cross-links contributed by the $i^{th}$ epoxy resin component. In each term, the quantity (w/MW) is the moles of n-functional cross-links which is converted to effective 4-functional cross-links by the factor{(n/2) - 1}. This conversion factor equals 0, 0.5, 1, 1.5, 2, 2.5, ... and so forth for epoxy resin functionality n equal to 2, 3, 4, 5, 6, 7, ..., respectively. It can be seen that difunctional epoxy resins can be omitted from the evaluation of the sum in this calculation because such resins act as chain extenders not cross-link points and thus don't contribute directly to the cross-link index X. (Mathematically, the conversion factor equals 0 for difunctional epoxy resins.)

For epoxy resins which are a mixture of different functionality species, which may be common for many commercially available epoxy resins, exact application of the above expression for X would require that they be broken into integer-functional components for calculation. However, to a very good approximation the contribution of mixed-functionality epoxy resins can be treated more simply by calculating their contribution to moles of effective 4-functional cross-links analogously to integer-functionality resin components by using the weight-average functionality of the mixed-functionality resin as n and using (n·EEW) in lieu of molecular weight, where EEW is the epoxy equivalent weight of the mixed-functionality resin. Both average functionality and epoxy equivalent weight are commonly provided by the manufacturers of mixed-functionality epoxy resins. Although the expression for *X* may appear complicated, it is actually quite simple to determine the theoretical cross-link index *X* for a given resin composition.

The theoretical cross-link index X is closely related to the more commonly used quantity, the cross-link density x, which is defined as moles of effective 4-functional cross-links per $cm^3$ of cured resin and which can be calculated

from X using the following equation:

$$x = \frac{X \cdot \rho}{(100 + PHR_{Dicy} + PHR_{catalyst})}$$

where $\rho$ is the density of the cured resin (g/cm$^3$) and $PHR_{Dicy}$ and $PHR_{catalyst}$ are the parts by weight of dicyandiamide and latent catalyst per hundred parts of epoxy resin.

As will be appreciated by those of skill in the art, the cross-link density x can be experimentally determined from the value of the rubbery shear modulus $G_R$ of a cured resin composition, where $G_R$ is the value of the shear modulus G at T > $T_{g,c}$ ($T_{gc}$ is the $T_g$ of the cured resin). $G_R$ can be conveniently measured using a dynamic mechanical spectrometer such as the TA Instruments ARES G2. It is also well-known to those skilled in the art that the fracture toughness of thermoset resins is generally proportional to the square root of the average molecular weight between effective 4-functional crosslinks $M_c$, where $M_c$ is in turn inversely proportional to the molar cross-link density x. Based on these well-established relations between cross-link density and fracture toughness, it can therefore be seen that fracture toughness is approximately proportional to the square root of the inverse of the theoretical cross-link index X. A halving of the theoretical cross-link index X thus results in approximately a 40% increase in fracture toughness.

Depending upon the end application, the epoxy resin composition may also include additional components, such as water, solvents, dispersants, inorganic fillers, toughening agents, mold release agents, flow aids, additional additives for specific functionality, such as wetting agents and/or reactive diluents. In a preferred embodiment, the epoxy resin composition includes a mold release agent. An example of a suitable release agent is an ester of montanic acid, which is available from Clariant under the product name LICOWAX® E.

In preferred embodiments of the invention, the present invention is directed to epoxy resin compositions that may be used in high volume automated manufacturing processes for the production of automotive articles and parts. In particular, embodiments of the invention may be used to produce structural components in automobiles that can be used to replace parts conventionally made from steel or aluminum. As noted above, to be used for such structural components, the prepregs must be capable of being used in automated systems and the resulting fiber reinforced composite parts must have sufficient mechanical properties to not only withstand the day-to-day wear that is normally encountered in automotive vehicles, but also meet safety requirements that are mandatory in modern automobiles.

To this end, the inventors have developed epoxy resin compositions that meet the above criteria. In particular, the inventors have discovered that an epoxy resin composition comprising a first resin component comprising an oxazolidone containing epoxy, a second epoxy component, a latent hardener having at least 35 percent of the particles having a particle size of less than 2 microns, and a latent catalyst in combination with select properties ranges of uncured glass transition temperature ($T_{g,0}$), cured glass transition temperature ($T_{g,c}$), and theoretical cross link index X from 0.10 to 0.20 can be used in high volume automated processes to prepare a fiber reinforced composite that meets the stringent requirements required in automotive applications.

Provided below are some representative epoxy resin compositions and associated properties for the epoxy resin compositions ($T_{g,0}$, $T_{g,c}$, and X (theoretical cross-link index of the cured resin). $T_{g,0}$, and $T_{g,c}$, are the glass transition temperature for the uncured and cured resins, respectively. In the compositions below, the amounts of the latent hardener and latent catalyst are not included for simplicity. The amounts of the first and second epoxy components are based on the total amount of epoxy in the epoxy resin compositions.

Epoxy Resin Composition (1):

a) first epoxy component (oxazolidone containing epoxy): 10 to 65 weight percent;
b) second epoxy component: 35 to 90 weight percent;
c) latent hardener having at least 35 percent of the particles having a particle size of less than 2 microns;
d) latent catalyst;
e) $T_{g,0}$ = 0 - 20 °C;
f) $T_{g,c}$ = 140 - 165 °C; and
g) $X$ = 0.10-0.20.

Epoxy Resin Composition (2):

a) first epoxy component (oxazolidone containing epoxy): 10 to 65 weight percent;
b) second epoxy component comprising a combination of a liquid epoxy and an epoxy novolac resin:

*i)* 0 to 65 weight percent of a liquid epoxy resin; and
*ii)* 0 to 70 weight percent of an epoxy novolac resin;

c) latent hardener having at least 35 percent of the particles having a particle size of less than 2 microns;
d) latent catalyst;
e) $T_{g,0}$ = 0 - 20°C;
f) $T_{g,c}$ = 140 - 165°C; and
g) $X$ = 0.10-0.20.

Epoxy Resin Composition (3):

a) first epoxy component (oxazolidone containing epoxy): 19 to 54 weight percent;
b) second epoxy component: 46 to 81 weight percent;
c) latent hardener having at least 35 percent of the particles having a particle size of less than 2 microns;
d) latent catalyst;
e) $T_{g,0}$ = 5 - 15 °C;
f) $T_{g,c}$ =150-160°C; and
g) $X$ = 0.10-0.20.

Epoxy Resin Composition (4):

a) first epoxy component (oxazolidone containing epoxy): 19 to 54 weight percent;
b) second epoxy component comprising a combination of a liquid epoxy and an epoxy novolac resin:

*i)* 11 to 38 weight percent of a liquid epoxy resin; and
*ii)* 17 to 61 weight percent of an epoxy novolac resin;

c) latent hardener having at least 35 percent of the particles having a particle size of less than 2 microns;
d) latent catalyst;
e) $T_{g,0}$ = 5 - 15 °C;
f) $T_{g,c}$ = 150 - 160°C; and
g) $X$ = 0.10-0.20.

Epoxy Resin Composition (5):

a) first epoxy component (oxazolidone containing epoxy): 25 to 43 weight percent;
b) second epoxy component: 57 to 75 weight percent;
c) latent hardener having at least 35 percent of the particles having a particle size of less than 2 microns;
d) latent catalyst;
e) $T_{g,0}$ = 5 - 15 °C;
f) $T_{g,c}$ = 150 - 160°C; and
g) $X$ = 0.10 - 0.20.

Epoxy Resin Composition (6):

a) first epoxy component (oxazolidone containing epoxy): 25 to 43 weight percent;
b) second epoxy component comprising a combination of a liquid epoxy and an epoxy novolac resin:

*i)* 25 to 38 weight percent of a liquid epoxy resin; and
*ii)* 23 to 46 weight percent of an epoxy novolac resin;

c) latent hardener having at least 35 percent of the particles having a particle size of less than 2 microns;
d) latent catalyst;
e) $T_{g,0}$ = 5 - 10 °C;
f) $T_{g,c}$ = 150 - 160 °C; and
g) $X$ = 0.10-0.175.

Epoxy resin compositions in accordance with embodiments of the invention may be prepared by mixing the various epoxy components together at an elevated temperature for a sufficient amount of time to completely dissolve the first epoxy component into the second epoxy component. In one embodiment, the first epoxy component is added to a preheated mixture of the second epoxy component that is then mixed for a sufficient amount of time to dissolve the

first epoxy component. Typically, the epoxies are mixed at a temperature between 100 and 130 °C, with a mixing temperature of 120 °C being preferred. Mixing speeds may range from 1,000 to 4,500 rpm, and in particular, from 2,500 to 3,500 rpm with a mixing speed of 3,000 rpm being preferred. The epoxy components are preferably mixed until a homogeneous epoxy mixture is obtained.

Following mixing of the epoxy components, the epoxy mixture is then cooled to a temperature of about 75 to 85 °C. Once the epoxy mixture has cooled, the latent hardener and soluble latent catalyst added to the mixture, and then mixed for a sufficient amount of time to disperse the latent hardener and solubilize the catalyst into the epoxy resin composition. A wide range of mixing conditions can be employed to achieve dispersion of the latent hardener and catalyst solubilization. In mixing the latent hardener particles into the epoxy mixture it is important that the particles be homogeneously dispersed and that agglomeration of the particles is reduced or prevented. To prevent agglomeration, the inventors have found that incorporation of the particles into a paste formed of a portion of the epoxy resin composition may help improve dispersion of the particles into the final epoxy resin composition.

Important variables which affect catalyst dissolution are temperature, time, shear rate, viscosity of the resin system at the mixing temperature, and inherent solubility of the catalyst in a particular resin composition at the mixing temperature. Preferably, conditions are employed which dissolve the catalyst with little to any premature reaction of the epoxy resin composition (preferably less than 2% reaction). The range of suitable mixing conditions as well as preferred mixing conditions generally depend on the catalyst structure and resin composition. For example, for the latent catalyst TBDMU, many mixing conditions can be employed to dissolve the catalyst. Preferred mixing conditions are mixing the powdered TBDMU into heated epoxy resin blend with a high shear dissolver-type impeller (e.g., Cowles blade) for 3 to 7 minutes at a temperature of 75 to 85 °C.

Once prepared, the epoxy resin composition may be infused into a fibrous material to form a prepreg in a manner known in the art.

Epoxy resin compositions in accordance with embodiments of the present invention may be combined with a wide variety of different reinforcing agents to produce a desired composite. In a preferred embodiment, the reinforcement agent comprises a fibrous material.

A wide variety of fibers may be used as the fibrous material. For example, the fibers may comprise carbon fibers, graphite fibers, glass fibers, ceramic fibers, aramid fibers, natural fibers (such as basalt, hemp, seagrass, hay, flax, straw, jute, or coconut).

Preferably, the fibrous material comprises carbon fibers that are arranged in tows. The "tows" (sometimes referred to as "rovings" or simply ’fibers") are multifilament fibers. The number of filaments per tow may be, for example, 100 to 30,000. The tows should be thermally and chemically stable under conditions of prepreg formation (e.g., curing of the epoxy resin composition).

Typically the fibers will have a circular or almost circular cross-section with a diameter in the range of from 0.5 to 30 microns, preferably from 2 to 20 microns, and more preferably, from 2 to 15 microns. In terms of weight, the individual tows may have a weight of, for example, 200 to 3,000 g/1000 meters, 600 to 2,000 g/1000 meters, or 750 to 1750 g/1000 meters.

Examples of suitable carbon fibers include Aksaca 3K A-38, 6K A-38, 12K A-42, 24K A-42, 12 K A-49 and 24 K A-49 carbon fibers available from Dow Aksa Ileri Kompozit Malzemeler Saai Ltd, Sti, Istanbul, Turkey. These product designations indicate the approximate number of filaments/roving in thousands (3K being 3,000 filaments, for example), and the approximate tensile strength of the fibers in hundreds of MPa (A-38 indicating a tensile strength of 3,800 MPa).

The fibers may be unidirectional, bidirectional or multidirectional depending on the desired properties required in the final fiber reinforced composite. The fibrous material may be in the form of tows or fabrics and may be in the form of random, knitted, non-woven, multi-axial (e.g., non-crimped fabric), braided or any other suitable pattern.

For structural applications, it is generally preferred that the prepreg comprises a plurality of stacked layers of fibers in which the fibers of each individual layer are unidirectional in orientation. By "unidirectional" it is meant that the reinforcing tows in an individual layer in the prepreg are aligned substantially parallel to each other. In a preferred embodiment, the prepreg comprises a plurality of stacked layers of aligned fibers that are infused with the epoxy resin composition.

When unidirectional fiber layers are used, the orientation of the fiber may be the same or vary throughout a prepreg stack to form a so called non-crimp fabric (NCF). However, this is only one of many possible orientations for stacks of unidirectional fiber layers. For example, unidirectional fibers in neighboring layers may be arranged orthogonal to each other in a so-called 0/90 arrangement, which signifies the angles between neighboring fiber layers. Other arrangements, such as 0/+45/-45/90 are of course possible, among many other arrangements. In one embodiment, the fibrous material comprises a braided or non-crimp fabric having a basis weight from 150 to 2,000 g/m$^2$, and in particular from 300 to 1600 g/m$^2$.

Prepregs in accordance with embodiments of the present invention may be produced by infusing the fibrous material with the epoxy resin composition. As discussed previously, the epoxy resin composition has a $T_{g,0}$ that is from 0 to 20 °C, and preferably from 5 °C to 10 °C. Advantageously, this allows the epoxy resin composition to be rapidly

infused into the fibrous material while minimizing and reducing void spaces (e.g., pockets of air bubbles) within the prepreg. In addition, the infusion process may be carried out at an elevated temperature so that the viscosity of the epoxy resin composition is further reduced. However it must not be so hot for sufficient length of time that an undesirable level of curing of the epoxy resin composition occurs.

In a preferred embodiment of the invention, the infusion of the epoxy resin composition into the fibrous material is carried out at temperatures in the range of from 110 to 125 °C, with a range of 115 to 122 °C, and in particular, a temperature of 120 °C being more preferred. It should be recognized that temperature ranges outside the above ranges may also be used. However, the use of higher or lower infusion temperatures typically requires adjusting the machine speed at which the infusion process is carried out. For example, at temperatures greater than about 120 °C, it may be necessary to carry out the infusion process at a higher machine speed in order to reduce the duration of time to which the epoxy resin composition is exposed to an elevated temperature to avoid undesirable crosslinking of the epoxy resin composition.

Similarly, to obtain a desired level of infusion and thereby decrease void spaces in the prepreg, the use of lower infusion temperatures will typically require a lower machine speed for infusing the epoxy resin composition into the fibrous material.

Typically the epoxy resin composition will be applied to the fibrous material at a temperature in this range and consolidated into the fibrous material by pressure such as that exerted by passage through one or more pairs of nip rollers.

A further aspect of the invention is directed to a process of preparing prepregs in accordance with embodiments of the invention. In a first step, the epoxy resin composition is extruded onto a sheet material to form a thin film coating thereon. The sheet material comprises a release film or paper from which the film coating of the epoxy resin composition may be transferred to the fibrous material during the prepregging process. After the film of the epoxy resin composition has been deposited on the sheet material, the sheet material with the film coating may be passed over a chill roll to cool the epoxy resin composition. The sheet material is then typically wound on a roll for future use.

In a second step of the process, the sheet material having the epoxy resin composition film coating is brought into contact with a surface of a fibrous material (e.g., NCF, braided, or unidirectional fabric) and is then subjected to pressure to infuse the epoxy resin into the fibrous material. Preferably, the fibrous material and the sheet material comprising the epoxy resin composition are provided as continuous tapes from respective supply rolls.

In a preferred embodiment, the sheet of fibrous material is sandwiched between two sheet materials on which film coatings of the epoxy resin composition are deposited. The sandwiched materials are then subjected to heating to raise the temperature of the epoxy resin composition. In one embodiment, this heating may be accomplished by passing the combination of the fibrous material and the epoxy resin compositions over a heated plate. Preferably, the epoxy resin composition is heated to a temperature of about 120 °C to facilitate rapid infusion of the epoxy resin composition into the fibrous material. Next, the combination is passed through a pair of nip rolls that press the epoxy resin compositions into opposite surfaces of the fibrous material.

In a preferred embodiment, the combination of the fibrous material and the epoxy resin compositions are subjected to a second step of passing the combination over a heated plated followed by passing the combination through a second nip to further infuse the epoxy resin composition into the fibrous material to form a resin infused prepreg. The prepreg may then be cooled, for example, by passing the material over a chill roll or a chill plate. After cooling, the prepreg may be wound onto a supply roll for future use.

Preferably, the release paper or film on which the epoxy resin composition was coated as a film is rewound on a roll following the step of cooling the epoxy resin composition.

As discussed above, the infusion step may be performed at an elevated temperature to lower the viscosity of the epoxy resin composition. In addition, the infused epoxy resin composition may be subjected to a partial curing step (advancement) to raise the glass transition temperature of the epoxy resin composition in the prepreg. The prepreg may then be packaged, stored, or shipped as required.

As discussed previously, in some embodiments it may also be desirable to subject the prepreg to an advancement step to raise the $T_g$ of the epoxy resin and thereby lower the tack of the prepreg.

## EXAMPLES

### Test Methods

*Tack measurement*

Tack force of films prepared from the epoxy resin composition and epoxy/carbon fiber prepregs were measured with a custom probe tack apparatus which has been described in V. Kalihari et al., Review of Scientific Instruments, Volume 84, 035104. Molten resin compositions were coated onto glass plates with a drawdown bar to give approximately 2 mil thickness films, with resin, glass plates, and drawdown bar all at a temperature between approximately 80 to 85

°C. Prepreg specimens were prepared by cutting 3 inch x 4.75 inch rectangles and affixing them to aluminum plates of similar size with double-sided tape. Films and prepregs were equilibrated for at least 1 day at 23 °C and 50% relative humidity prior to measurement, with measurements made under the same conditions. The tack force measurement was determined according to the following procedure:

(1) the series of coated glass plates or prepreg specimens were positioned into substrate holders for robotic loading and unloading onto the x-y stage of the instrument;
(2) a 1 cm diameter spherical stainless steel probe was brought into contact with the resin coating or prepreg;
(3) a 100 g normal force was applied for 5 seconds as a repeatable preloading starting point for the tack measurement;
(4) the probe was removed vertically at a rate of 1 mm/s until the probe detaches from the resin coating or prepreg;
(5) the raw data of load vs. displacement was analyzed to determine the peak normal force (in grams) during probe lift-off, which is reported as the tack force; and
(6) the measurement was repeated a total of three times, using the x-y stage to move the sample such that each replicate test is at a different position. For each epoxy resin composition, four coatings were prepared, reporting the average tack force and standard deviation for the total of twelve replicates.

*Glass transition temperature*

Glass transition temperatures of the epoxy resin compositions before and after cure were measured using a TA Instruments Q2000 differential scanning calorimeter (DSC). Measurements were made on either epoxy resin samples (typically 2-10 mg, using hermetically sealed aluminum pans) or resin/carbon fiber prepreg samples (die-cut discs of prepreg, 5-15 mg, using standard aluminum pans with crimped inverted lids). Samples were run under the following 5-step protocol which effectively mimics the temperature profile in a molding operation at a mold temperature of 150 °C:

(1) the samples were heated from -20 °C to 90 °C at 10 °C/min;
(2) the samples were then heated from 90 °C to 150 °C at (nominal) 200 °C/min;
(3) the samples were held isothermally at 150 °C for 15 minutes;
(4) the samples were cooled from 150 °C to 30 °C at 20 °C/min; and
(5) the samples were heated from 30°C to 250°C at 20 °C/min.

The temperature at half-height of the step transition observed in the plot of heat flow vs. temperature for step 1) of the DSC method is either: (a) the uncured glass transition temperature of the resin composition ($T_{g,0}$), when the sample is the resin composition alone; or (b) the glass transition temperature of the prepreg ($T_{g,p}$) when the sample is epoxy/carbon fiber prepreg. In the case where the prepreg has been made under conditions where there is no partial reaction or advancement of the resin, $T_{g,p} = T_{g,0}$. The temperature at half-height of the step transition observed in the plot of heat flow vs. temperature for step 5) of the DSC method is the cured glass transition temperature of the resin composition ($T_{g,c}$) regardless of whether the sample is resin-only or prepreg.

The materials used in the adhesive compositions are identified below. All percentages are weight percents unless indicated otherwise. All physical property and compositional values are approximate unless indicated otherwise.

"EPOXY-1", refers to an oxazolidone containing solid epoxy resin, and is available under the trademark SER® 6508 from The Dow Chemical Company.
"EPOXY-2", refers to an epoxy that is a diglycidyl ether of bisphenol A, and is available under the trademark DER® 331 from The Dow Chemical Company.
EPOXY-3", refers to an epoxy novo lac resin, and is available under the trademark DER® 438 from The Dow Chemical Company.
"LH": refers to a commercially available dicyandiamide epoxy latent hardener available under the trademark DYHARD®, available from Air Products and Chemicals, Inc. The particles were processed to have a d50 of 2.46 microns.
"CAT": refers to a commercially available latent catalyst, toluene bis-dimethyl urea, available under the trademark OMICURE™ U-410M from Diamond Performance Materials.
"RA": refers to an internal release agent comprising an ester of motanic acid available under the trademark LICOLUB®, WE 4 from Clariant.

In the following six examples, six epoxy resin compositions were prepared in accordance with embodiments of the invention. The examples are provided to show the value of prepreg Tg ($T_{g,p}$) which is required for the prepreg to have sufficiently low tack for automated cutting, handling, and layup operations; and (2) how uncured Tg can be used as proxy property for tack, whether $T_{g,0}$ (i.e., resin composition before any cure) or $T_{g,p}$ (i.e., Tg of the prepreg, which is higher than $T_{g,0}$ if there has been some reaction during prepregging).

Examples 1 to 6, which are summarized in Table 1 below, were prepared according to the following procedure. In a first step, a blend of the epoxy components was prepared by adding EPOXY-1 to a preheated (120 °C) mixture of EPOXY-2 and EPOXY-3. The epoxy blend was then mixed for 1 minute at 3,000 rpm using a FlackTek SpeedMixer, followed by repeated cycles of heating the epoxy blend for 5 minutes at 120 °C followed by speed mixing for 1 minute at 3,000 rpm until the EPOXY-1 was completely dissolved and epoxy blend was homogeneous. The epoxy blend was then cooled to a temperature of 85°C. Preweighed amounts of the latent catalyst (CAT) and latent hardener (LH) were then added to the epoxy blend. The blend of epoxy resins, latent catalyst and latent hardener were mixed for two cycles of 90 seconds with a FlackTek SpeedMixer to dissolve and disperse latent catalyst and latent hardener, respectively, into the epoxy blend to form a homogenous resin blend.

The tack force of four film coating of each epoxy resin composition was determined in accordance with the procedures provided above with respect to "Tack Measurement".

The composition of each epoxy resin composition and the results of the tack force measurements are summarized in Table 1 below.

Table 1: Tack Force of Epoxy Resin Composition Samples

| Example No. | EPOXY-1 (wt. %)* | EPOXY-2 (wt. %)* | EPOXY-3 (wt. %)* | LH (PHR) | CAT (PHR) | $T_{g,0}$ (°C) | $T_{g,c}$ (°C) | X** | Tack force (g) | |
|---|---|---|---|---|---|---|---|---|---|---|
| | | | | | | | | | *mean* | Std. Dev. |
| 1 | 57.7 | 16.1 | 26.2 | 7.93 | 4 | 20.0 | -- | 0.126 | 78 | 22 |
| 2 | 52.6 | 18.1 | 29.3 | 8.25 | 4 | 17.5 | -- | 0.134 | 83 | 23 |
| 3 | 42.0 | 22.2 | 35.8 | 8.92 | 4 | 12.7. | 160 | 0.150 | 50 | 26 |
| 4 | 36.6 | 24.4 | 39.0 | 9.26 | 4 | 9.2 | 159 | 0.158 | 378 | 94 |
| 5 | 31.1 | 26.5 | 42.4 | 9.61 | 4 | 6.6 | 160 | 0.166 | 740 | 137 |
| 6 | 25.4 | 28.8 | 45.8 | 9.97 | 4 | 3.4 | 161 | 0.174 | 536 | 232 |

* based on the total weight of all epoxy components.
**Units of cross-link index X are moles of effective 4-functional cross-links for a weight in grams for composition shown.

From Table 1 it can be see that uncured $T_{g,0}$ greater than about 12 °C is required for low tack at a temperature of 23 °C. As is known to those skilled in the art, the tack of epoxy/carbon fiber prepreg will be less than or equal to the tack of the resin itself: equal to in the case of what is commonly referred to as "semi-preg" where there is a significant surface layer of non-infused resin on the prepreg; or less than in the case where the resin is well-infused into the carbon fiber reinforcement and the fibers interfere with adhesive attachment to the surface. Similarly, the resin to carbon fiber ratio of the prepreg can influence prepreg tack. As discussed previously, a high degree of resin infusion is provided by epoxy resin compositions in accordance with the present invention. The high rate of infusion and homogeneous distribution of the latent hardener and catalyst helps to provide the rapid cure provided by the epoxy resin composition. In particular, the high degree of infusion of the epoxy resin composition lowers prepreg tack below that of the epoxy resin itself. The results show that a $T_g$ of the epoxy resin composition in the prepreg ($T_{g,p}$) of greater than about 12 °C provides the low level of tack required for automated cutting, handling, and assembly of prepreg during composite part manufacture. In this regard, it is noted that $T_{g,p}$ (prepreg) can advantageously be higher than $T_{g,0}$ (fully uncured resin composition) via a controlled level of resin reaction during the prepregging process.

Example 7

An epoxy resin blend was prepared by melt compounding EPOXY-1, EPOXY-2, EPOXY-3, and RA in a 25 mm twin-extruder at a temperature of about 130 °C for a sufficient time to form a homogeneous epoxy blend. The resulting epoxy blend was collected and allowed to cool to room temperature.

The epoxy blend was then combined with the latent hardener (LH-1) and latent catalyst (CAT-1) to prepare the epoxy resin composition. More specifically, the epoxy resin composition was prepared by reheating 11.4 kg of the epoxy blend in a 5 gallon metal pail to a temperature of 80 °C. A latent hardener (LH) (DYHARD DF50EP Dicy paste, which is 50 weight percent DYHARD 100SF and 50 weight percent of an unspecified bisphenol A diglycidyl ether, available from AlzChem) and latent catalyst paste (30 weight percent CAT and 70 weight percent EPOXY-2) were added to the heated epoxy blend in the amounts of 2.49 kg and 1.81 kg, respectively. Agitation was performed via an overhead mixing impeller equipped with a 23 cm diameter Cowles blade operated at about 475 rpm. Total mixing time was about 10

minutes, resulting in a homogeneous clump-free dispersion of the hardener and catalyst in the epoxy resin blend, ending at a final temperature of about 85 °C due to a minor degree of shear heating during the mixing process.

The temperature, time and shear conditions employed in mixing result in substantially complete dissolution of the catalyst in the epoxy blend. The epoxy resin composition was immediately poured into the gap between two oil-heated nip rollers (oil temperature 75 °C) of a 3-roll nip fed reverse roll coater on the prepreg machine. Dams were set 65 cm apart in the nip to control the width of the epoxy coating. The gap and parallelism between the nip rollers were adjusted until the desired coating weight of 62 grams per square meter (g/m$^2$) was obtained uniformly within 2 g/m$^2$ across the coating width, as verified by weighing 10 x 10 cm squares of coated versus uncoated release paper. A gamma gauge was then used to monitor coating thickness and automatically adjust the nip gap during the remainder of the coating process, with random process variability of about ± 2 g/m$^2$. Line speed during the coating process was 2 meters per minute (mpm). The epoxy resin coated release paper was collected on a takeup roller at a distance down the line where the coating had cooled to a slightly tacky state. The composition of Example 7 is provided in Table 2 below.

Table 2: Composition of Example 7

| Example No. | EPOXY-1 (wt. %) | EPOXY-2 (wt. %) | EPOXY-3 (wt. %) | LH (wt. %) | CAT (wt. %) | RA (wt. %) |
|---|---|---|---|---|---|---|
| Example 7 | 33.1 | 18.6 | 34.8 | 7.9 | 3.5 | 2.2 |

Unidirectional epoxy-carbon fiber prepreg was then prepared by merging two layers of coating of the epoxy resin composition of Example 7 with multiple tows of carbon fiber by passing coatings and fiber simultaneously between two sets of heated nip rollers in a continuous process. A creel with 76 spools of AKSA 24K A-42 carbon fiber was used to supply continuous tows of carbon fiber to the process. The carbon fiber tows were passed through combs to set uniform spacing between tow centers across the width of the prepreg. Prior to entering the nip rollers, the tows were then passed through a device to spread the tows into a gap-free array of carbon fibers across the width of the prepreg. Epoxy resin coated release paper from the reverse roll coater was introduced to the bottom side of the fibers as they entered a 3 meter long heated table (oil temperature of 85 °C), at the end of the heated table the second resin film was introduced to the top of the fabric. The filmed resin was unrolled and contacted the top roller at a location equal to half the circumference away from the nip. With this arrangement, the resin coating was fully heated to the surface temperature of the nip rollers (oil temperature of 100 °C) by the time it reached the nip where it was merged with the carbon fibers and first resin film. The gap between the nip rollers was set to provide a several millimeter wide bead of fluxed resin in the gap of the nip rollers where it contacted the carbon fibers, with the setting further to provide the desired resin content of the prepreg. This prepregging process was operated at a line speed of 2 meter per minute (mpm).

The symmetric sandwich of carbon fiber between two epoxy-coated release papers emerging from the nip rollers was further passed over a second heated table (oil temperature 105 °C) and through a second set of oil-heated compaction rollers (oil temperature of 100 °C) to further promote impregnation of the formulated epoxy resin system into the fibers. The edges of the resultant prepreg were slit to yield a final width of 52 cm and the prepreg was collected on a takeup roller.

The overall prepreg areal weight (in units of g/m$^2$) was determined gravimetrically as the difference in weights between 10 x 10 cm squares of release paper plus prepreg versus release paper alone. The fiber areal weight (in units of gsm) was determined by weighing a 1 meter long bundle of fibers from the feed creels. The weight of the fibers in grams divided by the width of the spread fibers before trimming defines the average fiber areal weight (in units of g/m$^2$). The resin areal weight was determined as the difference between the prepreg and fiber areal weights. Resin content (in units of weight percent) was calculated as 100 times the ratio of resin areal weight to prepreg areal weight. These measurements were done at the beginning and end of each roll.

The final unidirectional epoxy-carbon fiber prepreg was gap-free and had good uniformity across the width, with average resin content of 39.8 weight percent (38.3, 41.3), average prepreg areal weight of 309.3 g/m$^2$ (301.5, 317), average fiber areal weight of 186 g/m$^2$, and average resin areal weight of 123 g/m$^2$ (115.5, 131).

A molded article was prepared by placing the prepreg in a mold at a mold temperature of 150 °C with a hold time of 60 seconds, and a cure time of about 240 seconds.

## Claims

1. An epoxy resin composition comprising
   a first epoxy resin component containing an oxazolidone;
   a second epoxy resin component;
   dicyandiamide particles having a particle distribution in which 98 percent of the dicyandiamide particles have a

diameter less than 10 microns, and at least 35% of the dicyandiamide particles have a particle size of less than 2 microns; and
an epoxy soluble latent catalyst.

2. The epoxy resin composition of claim 1, wherein the second epoxy resin component comprises a liquid epoxy resin and an epoxy novolac resin.

3. The epoxy resin composition of claim 2, wherein the amount of the first epoxy resin component is from 19 to 54 weight percent, the amount of liquid epoxy resin is from 11 to 38 weight percent, and the amount of epoxy novolac resin is from 17 to 61 weight percent based on the total weight of all epoxy resin components in the epoxy resin composition.

4. The epoxy resin composition of claim 1, wherein the latent catalyst is toluene bis-dimethyl urea.

5. The epoxy resin composition of claim 1, wherein the second epoxy resin component comprises a blend of a diglycidyl ether of bisphenol A and an epoxy novolac resin.

6. The epoxy resin composition of claim 1, wherein the epoxy resin composition has an uncured glass transition temperature ($T_{g,0}$) from 5 to 15 °C, and a cured glass transition temperature ($T_{g,c}$) from 150 to 160 °C.

7. The epoxy resin composition of claim 1, wherein the epoxy resin composition has a theoretical cross-link index (X) that is from 0.10 to 0.20.

8. The epoxy resin composition of claim 1, wherein the amount of the latent catalyst in the epoxy resin composition is present at a level of 1 to 7 parts per hundred parts epoxy resin, and the latent hardener is present in an amount relative to the total amount of epoxy components in the epoxy resin composition corresponding to an epoxy/hardener equivalent ratio from 0.5 to 3.

9. A prepreg comprising the epoxy resin composition of claim 1.

10. An epoxy resin composition as claimed in claim 1, wherein:

the first epoxy component containing an oxazolidone is present in an amount from 10 to 65 weight percent, based on total weight of all epoxy components;
the second epoxy resin component is present in an amount from 35 to 90 weight percent, based on the total weight of all epoxy components; and
the epoxy resin composition has a $T_{g,0}$ that is from 0 to 20 °C, a $T_{g,c}$ that is from 140 to 165 °C, and a theoretical cross-link index *X* that is from 0.10 to 0.20.

11. The epoxy resin composition of claim 10, wherein the latent catalyst is toluene bis-dimethyl urea.

12. The epoxy resin composition of claim 10, wherein the second epoxy resin component comprises a combination of a diglycidyl ether of bisphenol A and an epoxy novolac resin.

13. The epoxy resin composition of claim 12, wherein the amount of diglycidyl ethers of bisphenol A is from 11 to 38 weight percent and the amount of epoxy novolac resin is from 17 to 61 weight percent, based on the total weight of all epoxy components in the epoxy resin composition.

14. The epoxy resin composition of claim 10, wherein the epoxy resin has a $T_{g,0}$ that is from 5 to 10 °C and a $T_{g,c}$ that is from 150 to 160 °C.

15. A prepreg as claimed in claim 9, comprising a fibrous material infused with the epoxy resin composition, wherein:

the second epoxy resin component comprises a blend of a diglycidyl ether of bisphenol A and an epoxy novolac resin; and
the epoxy resin composition has a $T_{g,0}$ that is from 5 to 15 °C, a $T_{g,c}$ that is from 140 to 165 °C, and a theoretical cross-link index *X* that is from 0.10 to 0.20.

16. The prepreg of claim 15, wherein the amount of the first epoxy resin component is from 10 to 65 weight percent, the amount of diglycidyl ethers of bisphenol A is from 11 to 38 weight percent and the amount of epoxy novolac resin is from 17 to 61 weight percent, based on the total weight of all epoxy components in the epoxy resin composition.

17. The prepreg of claim 15, wherein the fibrous material comprises carbon fibers.

18. The prepreg of claim 17, wherein the fibrous material comprises a plurality of stacked layers of non-crimped fabrics.

19. The prepreg of claim 15, wherein the prepreg has been partially cured so that the glass transition temperature of the prepreg ($T_{g,p}$) is from 12 to 25°C.

**Patentansprüche**

1. Eine Epoxidharz-Zusammensetzung, beinhaltend
eine erste Epoxidharzkomponente, die ein Oxazolidon enthält;
eine zweite Epoxidharzkomponente;
Dicyandiamid-Partikel mit einer Partikelverteilung, bei der 98 Prozent der Dicyandiamid-Partikel einen Durchmesser von weniger als 10 Mikrometer aufweisen und mindestens 35 % der Dicyandiamid-Partikel eine Partikelgröße von weniger als 2 Mikrometer aufweisen; und
einen epoxidlöslichen latenten Katalysator.

2. Epoxidharz-Zusammensetzung gemäß Anspruch 1, wobei die zweite Epoxidharzkomponente ein flüssiges Epoxidharz und ein Epoxidnovolakharz beinhaltet.

3. Epoxidharz-Zusammensetzung gemäß Anspruch 2, wobei bezogen auf das Gesamtgewicht aller Epoxidharzkomponenten in der Epoxidharz-Zusammensetzung die Menge der ersten Epoxidharzkomponente 19 bis 54 Gewichtsprozent beträgt, die Menge an flüssigem Epoxidharz 11 bis 38 Gewichtsprozent beträgt und die Menge an Epoxidnovolakharz 17 bis 61 Gewichtsprozent beträgt.

4. Epoxidharz-Zusammensetzung gemäß Anspruch 1, wobei der latente Katalysator Toluolbisdimethylharnstoff ist.

5. Epoxidharz-Zusammensetzung gemäß Anspruch 1, wobei die zweite Epoxidharzkomponente ein Gemisch aus einem Diglycidylether von Bisphenol A und einem Epoxidnovolakharz beinhaltet.

6. Epoxidharz-Zusammensetzung gemäß Anspruch 1, wobei die Epoxidharz-Zusammensetzung ungehärtet eine Glasübergangstemperatur ($T_{g,0}$) von 5 bis 15 °C und gehärtet eine Glasübergangstemperatur ($T_{g,c}$) von 150 bis 160 °C aufweist.

7. Epoxidharz-Zusammensetzung gemäß Anspruch 1, wobei die Epoxidharz-Zusammensetzung einen theoretischen Vernetzungsindex (X) aufweist, der 0,10 bis 0,20 beträgt.

8. Epoxidharz-Zusammensetzung gemäß Anspruch 1, wobei die Menge des latenten Katalysators in der Epoxidharz-Zusammensetzung bei einem Niveau von 1 bis 7 Teilen je hundert Teilen Epoxidharz vorhanden ist und der latente Härter relativ zur Gesamtmenge an Epoxidkomponenten in der Epoxidharz-Zusammensetzung in einer Menge vorhanden ist, die einem Epoxid-Härter-Äquivalenzverhältnis von 0,5 bis 3 entspricht.

9. Ein Prepreg, das die Epoxidharz-Zusammensetzung gemäß Anspruch 1 beinhaltet.

10. Epoxidharz-Zusammensetzung gemäß Anspruch 1, wobei:

bezogen auf das Gesamtgewicht aller Epoxidkomponenten die erste, ein Oxazolidon enthaltende Epoxidkomponente in einer Menge von 10 bis 65 Gewichtsprozent vorhanden ist;
bezogen auf das Gesamtgewicht aller Epoxidkomponenten die zweite Epoxidharzkomponente in einer Menge von 35 bis 90 Gewichtsprozent vorhanden ist; und
die Epoxidharz-Zusammensetzung eine $T_{g,0}$, die 0 bis 20 °C beträgt, eine $T_{g,c}$, die 140 bis 165 °C beträgt, und einen theoretischen Vernetzungsindex X, der 0,10 bis 0,20 beträgt, aufweist.

**11.** Epoxidharz-Zusammensetzung gemäß Anspruch 10, wobei der latente Katalysator Toluolbisdimethylharnstoff ist.

**12.** Epoxidharz-Zusammensetzung gemäß Anspruch 10, wobei die zweite Epoxidharzkomponente eine Kombination eines Diglycidylethers von Bisphenol A und eines Epoxidnovolakharzes beinhaltet.

**13.** Epoxidharz-Zusammensetzung gemäß Anspruch 12, wobei bezogen auf das Gesamtgewicht aller Epoxidkomponenten in der Epoxidharz-Zusammensetzung die Menge an Diglycidylethern von Bisphenol A 11 bis 38 Gewichtsprozent beträgt und die Menge an Epoxidnovolakharz 17 bis 61 Gewichtsprozent beträgt.

**14.** Epoxidharz-Zusammensetzung gemäß Anspruch 10, wobei das Epoxidharz eine $T_{g,0}$, die 5 bis 10 °C beträgt, und eine $T_{g,c}$, die 150 bis 160 °C beträgt, aufweist.

**15.** Prepreg gemäß Anspruch 9, beinhaltend ein faseriges Material, das mit der Epoxidharz-Zusammensetzung getränkt ist, wobei:

die zweite Epoxidharzkomponente ein Gemisch von einem Diglycidylether von Bisphenol A und einem Epoxidnovolakharz beinhaltet; und
die Epoxidharz-Zusammensetzung eine $T_{g,0}$, die 5 bis 15 °C beträgt, eine $T_{g,c}$, die 140 bis 165 °C beträgt, und einen theoretischen Vernetzungsindex X, der 0,10 bis 0,20 beträgt, aufweist.

**16.** Prepreg gemäß Anspruch 15, wobei bezogen auf das Gesamtgewicht aller Epoxidkomponenten in der Epoxidharz-Zusammensetzung die Menge der ersten Epoxidharzkomponente 10 bis 65 Gewichtsprozent beträgt, die Menge an Diglycidylethern von Bisphenol A 11 bis 38 Gewichtsprozent beträgt und die Menge an Epoxidnovolakharz 17 bis 61 Gewichtsprozent beträgt.

**17.** Prepreg gemäß Anspruch 15, wobei das faserige Material Kohlenstofffasern beinhaltet.

**18.** Prepreg gemäß Anspruch 17, wobei das faserige Material eine Vielzahl von übereinanderliegenden Schichten von Gelegen beinhaltet.

**19.** Prepreg gemäß Anspruch 15, wobei das Prepreg teilweise gehärtet wurde, sodass die Glasübergangstemperatur des Prepregs ($T_{g,p}$) 12 bis 25 °C beträgt.

## Revendications

**1.** Une composition de résine époxy comprenant
un premier constituant résine époxy contenant une oxazolidone ;
un deuxième constituant résine époxy ;
des particules de dicyanodiamide ayant une distribution des particules dans laquelle 98 pour cent des particules de dicyanodiamide ont un diamètre inférieur à 10 microns, et au moins 35 % des particules de dicyanodiamide ont une taille de particule de moins de 2 microns ; et
un catalyseur latent soluble dans l'époxy.

**2.** La composition de résine époxy de la revendication 1, dans laquelle le deuxième constituant résine époxy comprend une résine époxy liquide et une résine novolaque époxy.

**3.** La composition de résine époxy de la revendication 2, dans laquelle la quantité du premier constituant résine époxy va de 19 à 54 pour cent en poids, la quantité de résine époxy liquide va de 11 à 38 pour cent en poids, et la quantité de résine novolaque époxy va de 17 à 61 pour cent en poids rapporté au poids total de tous les constituants résine époxy dans la composition de résine époxy.

**4.** La composition de résine époxy de la revendication 1, dans laquelle le catalyseur latent est la toluène bis-diméthylurée.

**5.** La composition de résine époxy de la revendication 1, dans laquelle le deuxième constituant résine époxy comprend un mélange homogène d'un éther diglycidylique de bisphénol A et d'une résine novolaque époxy.

**6.** La composition de résine époxy de la revendication 1, la composition de résine époxy ayant une température de transition vitreuse à l'état non durci ($T_{g,0}$) allant de 5 à 15 °C, et une température de transition vitreuse à l'état durci ($T_{g,c}$) allant de 150 à 160 °C.

**7.** La composition de résine époxy de la revendication 1, la composition de résine époxy ayant un indice de réticulation théorique (X) qui va de 0,10 à 0,20.

**8.** La composition de résine époxy de la revendication 1, dans laquelle la quantité du catalyseur latent dans la composition de résine époxy est présente à un niveau de 1 à 7 parties pour cent parties de résine époxy, et le durcisseur latent est présent dans une quantité relative à la quantité totale de constituants époxy dans la composition de résine époxy correspondant à un rapport équivalent époxy/durcisseur allant de 0,5 à 3.

**9.** Un préimprégné comprenant la composition de résine époxy de la revendication 1.

**10.** Une composition de résine époxy telle que revendiquée dans la revendication 1, dans laquelle :

le premier constituant époxy contenant une oxazolidone est présent dans une quantité allant de 10 à 65 pour cent en poids, rapporté au poids total de tous les constituants époxy;
le deuxième constituant résine époxy est présent dans une quantité allant de 35 à 90 pour cent en poids, rapporté au poids total de tous les constituants époxy ; et
la composition de résine époxy ayant une $T_{g,0}$ qui va de 0 à 20 °C, une $T_{g,c}$ qui va de 140 à 165 °C, et un indice de réticulation théorique *X* qui va de 0,10 à 0,20.

**11.** La composition de résine époxy de la revendication 10, dans laquelle le catalyseur latent est la toluène bis-diméthylurée.

**12.** La composition de résine époxy de la revendication 10, dans laquelle le deuxième constituant résine époxy comprend une combinaison d'un éther diglycidylique de bisphénol A et d'une résine novolaque époxy.

**13.** La composition de résine époxy de la revendication 12, dans laquelle la quantité d'éthers diglycidyliques de bisphénol A va de 11 à 38 pour cent en poids et la quantité de résine novolaque époxy va de 17 à 61 pour cent en poids, rapporté au poids total de tous les constituants époxy dans la composition de résine époxy.

**14.** La composition de résine époxy de la revendication 10, dans laquelle la résine époxy a une $T_{g,0}$ qui va de 5 à 10 °C et une $T_{g,c}$ qui va de 150 à 160 °C.

**15.** Un préimprégné tel que revendiqué dans la revendication 9, comprenant un matériau fibreux imprégné de la composition de résine époxy, dans lequel :

le deuxième constituant résine époxy comprend un mélange homogène d'un éther diglycidylique de bisphénol A et d'une résine novolaque époxy ; et
la composition de résine époxy a une $T_{g,0}$ qui va de 5 à 15 °C, une $T_{g,c}$ qui va de 140 à 165 °C, et un indice de réticulation théorique *X* qui va de 0,10 à 0,20.

**16.** Le préimprégné de la revendication 15, dans lequel la quantité du premier constituant résine époxy va de 10 à 65 pour cent en poids, la quantité d'éthers diglycidyliques de bisphénol A va de 11 à 38 pour cent en poids et la quantité de résine novolaque époxy va de 17 à 61 pour cent en poids, rapporté au poids total de tous les constituants époxy dans la composition de résine époxy.

**17.** Le préimprégné de la revendication 15, dans lequel le matériau fibreux comprend des fibres de carbone.

**18.** Le préimprégné de la revendication 17, dans lequel le matériau fibreux comprend une pluralité de couches empilées de tissus non crêpés.

**19.** Le préimprégné de la revendication 15, le préimprégné ayant été partiellement durci de sorte que la température de transition vitreuse du préimprégné ($T_{g,p}$) va de 12 à 25 °C.

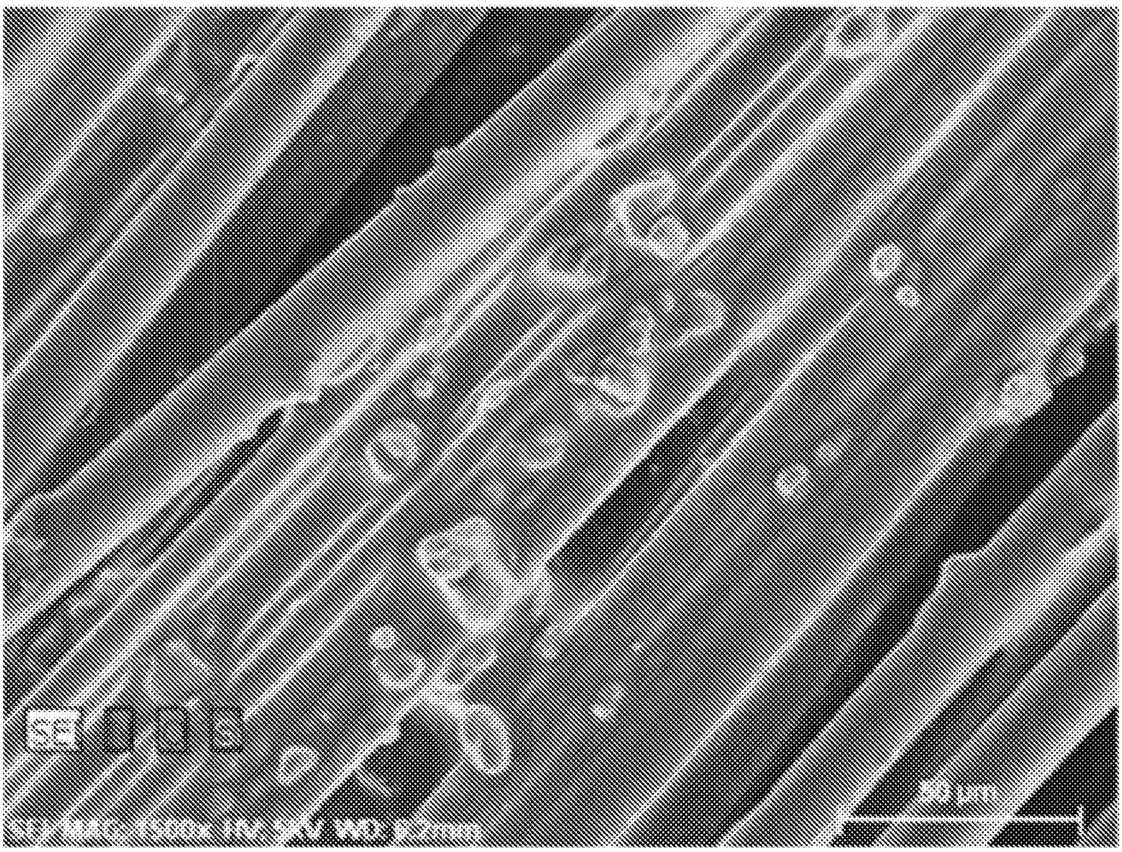

FIG. 1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2015023615 A1
- US 5480958 A
- WO 2015047799 A1
- US 4066628 A
- US 3313747 A
- US 4742146 A


### Non-patent literature cited in the description


- **H. E. LEE ; K. NEVILLE.** Handbook of Epoxy Resins. McGraw-Hill, 1967
- **V. KALIHARI et al.** *Review of Scientific Instruments,* vol. 84, 035104